# DEMANDE DE BREVET EUROPEEN

(11) **EP 4 079 578 A2**
(43) Date de publication de la demande: **26.10.2022**
(21) Numéro de dépôt: 22169014.2
(22) Date de dépôt: 20.04.2022
(51) Int. Cl.: B60R 3/02, B60D 1/58, B60R 9/06

(54) **DISPOSITIF ANTI-EFFRACTION POUR VÉHICULE COMPRENANT UN ÉLÉMENT MARCHEPIED**

(30) Priorité: 20.04.2021 BE 202105308
(71) Demandeur: Bardes, 4800 Verviers (BE)
(72) Inventeur: DESSAUCY, Philippe, 4800 Verviers (BE); DESSAUCY, Olivier, 4910 Theux (BE)
(74) Mandataire: Calysta NV

(57) **Abrégé**

Un dispositif anti-effraction 1 pour véhicule muni d'une attache-remorque 11, d'une boule d'attelage 2 et d'un bloc d'ancrage 5 au véhicule, le dispositif anti-effraction 1 comprenant : un élément marchepied 4 agencé de manière mobile entre une position basse et une position haute de verrouillage, un support fixe arrière 6, un support fixe avant 7 présentant une encoche 12. L'élément marchepied 4 est relié solidairement à un support rotatif 8 qui est agencé en libre rotation entre le support fixe arrière 6 et le support fixe avant 7 et présente un premier ergot 9 et un deuxième ergot 10. L'élément marchepied est dans la position basse lorsque le premier ergot 9 du support rotatif 8 est logé dans l'encoche 12 du support fixe avant 7 et, l'élément marchepied 4 est dans la position haute de verrouillage lorsque le deuxième ergot 10 du support rotatif est logé dans l'encoche 12 du support fixe avant 7.

## Description

La présente invention se rapporte à un dispositif anti-effraction pour véhicule muni d'une attache-remorque, d'une boule d'attelage et d'un bloc d'ancrage au véhicule, comprenant un élément marchepied.

La présente invention se rapporte en outre à un procédé de placement du dispositif anti-effraction.

La présente invention se rapporte enfin à un système anti-effraction pour véhicule muni d'une attache-remorque, d'une boule d'attelage et d'un bloc d'ancrage au véhicule.

Les systèmes d'accès à l'espace arrière du véhicule tels que les éléments marchepied sont bien connus des industriels, consommateurs et travailleurs. En effet, ces systèmes sont utilisés pour accéder à l'espace arrière du véhicule, notamment pour des véhicules dont le plancher est surélevé comme par exemple dans les véhicules utilitaires. Les systèmes d'accès tels que les éléments marchepied sont particulièrement utiles compte tenu du poids des marchandises ou autre matériel à charger et décharger par les utilisateurs, diminuant ainsi l'effort physique à réaliser pour entrer et sortir du véhicule

Les constructeurs automobiles ont intégré des zones d'appui du pied directement à la carrosserie d'un véhicule permettant la montée et la descente d'un utilisateur du véhicule. En effet, ces zones d'appui correspondent à des renfoncements au niveau de la zone basse de l'encadrement des portes du véhicule. Ces zones d'appui présentent l'inconvénient d'être étroites, glissantes et donc inadaptées à une utilisation quotidienne par des ouvriers, plus particulièrement lorsqu'il s'agit de l'accès à l'espace arrière du véhicule tel que le coffre ou l'espace de stockage arrière.

Par conséquent, divers systèmes marchepied ont été proposés pour faciliter l'accès à l'intérieur d'un véhicule pour les utilisateurs.

En outre, il s'avère que les artisans, ouvriers ou autre corps de métier utilisent les véhicules utilitaires pour transporter à la fois leurs outils et le matériel nécessaires à la réalisation des travaux. Ces outils et le matériel qui sont stockés et transportés dans les véhicules utilitaires ont une valeur marchande très importante et sont indispensables à l'exercice de la profession de ces corps de métier tels que des électriciens, maçons, couvreurs, plombiers ou autre.

Un problème récurrent est que, afin d'éviter de charger et décharger le véhicule utilitaire tous les jours, les outils et matériels encombrants et lourds sont généralement stockés dans le véhicule utilitaire pendant la nuit et sont donc sujets à des vols et effractions.

Il a donc été développé des dispositifs anti-effractions pour véhicule utilitaire qui comprennent également un élément marchepied, permettant à la fois de faciliter l'accès à l'espace de stockage du véhicule et de protéger cet espace de stockage contre les vols et effractions.

Actuellement, il existe un dispositif anti-effraction qui résout au moins partiellement les inconvénients cités ci-dessus. Ce dispositif est connu du document GB2530657.

Ce document GB2530657 divulgue un dispositif anti-effraction comprenant :
- un élément de fixation, et
- un élément marchepied agencé de manière mobile entre une position basse et une position haute de verrouillage.

L'élément de fixation permet au dispositif d'être fixé directement au châssis du véhicule, et l'élément marchepied oscille autour d'un axe horizontal s'étendant perpendiculairement à l'axe de la longueur avant arrière du véhicule, c'est-à-dire l'axe horizontal selon lequel l'élément marchepied oscille s'étend le long de la largeur du véhicule. En outre, l'élément marchepied oscille entre deux positions, une position haute qui permet de bloquer l'ouverture des portes et une position basse qui libère l'ouverture des portes et permet l'utilisation du marchepied comme élément facilitant l'accès à l'espace de stockage du véhicule pour la montée et la descente d'un utilisateur.

En fonctionnement, soit le dispositif anti-effraction selon ce document antérieur est en position haute, dans laquelle l'élément marchepied fait obstacle à l'ouverture des portes arrière du véhicule et dans laquelle il est possible d'accrocher une remorque sur la boule d'attelage, soit le dispositif est en position basse, dans laquelle l'élément marchepied est en position horizontale permettant à l'utilisateur d'ouvrir les portes et de prendre appui pour avoir accès à l'espace de stockage du véhicule, dans laquelle l'ouverture des portes arrière du véhicule n'est pas bloquée et dans laquelle la boule d'attelage n'est pas accessible pour accrocher une remorque.

Malheureusement, ce type de dispositif anti-effraction rend son installation difficile, son utilisation n'est pas aisée et ne répond pas totalement aux attentes des utilisateurs.

En effet, l'installation d'un tel dispositif est difficile et non souhaitable étant donné qu'elle s'effectue directement sur le châssis du véhicule ce qui entraîne des dommages. En fonctionnement, l'utilisateur sera malheureusement obligé de choisir entre l'une ou l'autre des positions haute ou basse. En position haute l'utilisateur pourra bloquer l'ouverture des portes et accrocher une remorque sur la boule d'attelage accessible mais ne bénéficiera pas de l'élément marchepied et en outre l'élément marchepied fera obstacle à l'utilisateur à l'espace de stockage arrière. En position basse l'utilisateur pourra utiliser le marchepied mais ne bénéficiera pas du blocage des portes, ni de l'accès à la boule d'attelage.

On comprend aisément que le passage entre les positions haute et basse avec un tel dispositif est tout sauf aisé et souhaitable pour les utilisateurs. En effet, ce passage est nécessairement effectué au moyen d'une étape de décrochage de la remorque, ce qui est particulièrement contraignant, entraînant des manipulations supplémentaires ou bien l'utilisateur doit faire le choix de laisser le dispositif dans l'une ou l'autre des positions et donc se passer de certains avantages dont il aurait besoin.

Il existe donc un réel besoin de fournir aux utilisateurs, un dispositif anti-effraction pour véhicule dont l'installation est facilitée et dont l'utilisation et la manipulation sont aisées, en permettant à l'utilisateur de pouvoir passer facilement et sans perte de temps d'une position de verrouillage à une position d'utilisation de l'élément marchepied ou inversement.

Pour résoudre ces problèmes, il est prévu suivant la présente invention un dispositif anti-effraction tel que mentionné au début, pour véhicule muni d'une attache-remorque, d'une boule d'attelage et d'un bloc d'ancrage au véhicule, le dispositif anti-effraction comprenant :
- un élément de fixation agencé pour être fixé entre l'attache-remorque et le bloc d'ancrage au véhicule, et
- un élément marchepied agencé de manière mobile entre une position basse et une position haute de verrouillage, caractérisé en ce que l'élément de fixation comprend :

- un support fixe arrière faisant face au bloc d'ancrage, et
- un support fixe avant opposé, faisant face à l'attache-remorque, qui est relié au support fixe arrière par des moyens de fixation, et présente au moins une encoche,
   en ce que l'élément marchepied étant relié solidairement à un support rotatif qui est agencé en libre rotation entre le support fixe arrière et le support fixe avant et présente au moins un premier ergot et au moins un deuxième ergot,
   en ce que le support fixe arrière et le support fixe avant comprennent chacun au moins une ouverture traversante agencée pour recevoir au moins un moyen d'accrochage de l'attache-remorque au bloc d'ancrage,
   et en ce que, dans la position basse du marchepied, ledit au moins un premier ergot du support rotatif est logé dans ladite au moins une première encoche du support fixe avant et, dans ladite position haute de verrouillage du marchepied, ledit au moins un deuxième ergot du support rotatif est logé dans ladite au moins une encoche du deuxième support fixe avant.

De manière particulièrement avantageuse, l'élément de fixation du dispositif anti-effraction selon la présente invention, est agencé pour être fixé à l'attache-remorque existante du véhicule et plus particulièrement entre l'attache-remorque et le bloc d'ancrage au véhicule existants, ne nécessitant donc pas d'endommager ni le châssis, ni la carrosserie du véhicule pour permettre sa fixation. Cela présente l'avantage de faciliter et simplifier le montage et le démontage du dispositif selon la présente invention.

L'élément de fixation du dispositif selon l'invention comprend le support fixe arrière agencé pour être fixé du côté véhicule en faisant face au bloc d'ancrage au véhicule et le support fixe avant, opposé, faisant face à l'attache-remorque, et relié au support fixe arrière par des moyens de fixation et orienté vers l'extérieur du véhicule. Cela présente l'avantage de former un espace entre le support fixe arrière et le support fixe avant de l'élément de fixation dans lequel est positionné un support rotatif qui est en libre rotation.

En effet, le support fixe arrière et le support fixe avant sont solidarisés avec des moyens de fixation qui sont traversants d'une partie centrale et vide du support rotatif positionné entre ces deux derniers, de telle manière que les moyens de fixation du support fixe avant au support fixe arrière, n'entravent pas la libre rotation du support rotatif.

En outre, le support fixe arrière et le support fixe avant comprennent également, chacun d'eux, au moins une ouverture traversante agencée pour recevoir un moyen d'accrochage, tel qu'un boulon, de l'attache-remorque au bloc d'ancrage. De la même manière, l'au moins un moyen d'accrochage traversant le support fixe arrière et le support fixe avant, traverse également une partie centrale et vide du support rotatif de telle sorte que la libre rotation de ce dernier n'est pas entravée.

En outre, le support fixe avant de l'élément de fixation comprend au moins une encoche, et le support rotatif comprend quant à lui au moins un premier et un deuxième ergot qui sont agencés pour se loger dans l'encoche selon la position du support rotatif.

En effet, l'élément marchepied est relié solidairement au support rotatif et est donc agencé de manière mobile, par rotation, entre une première position basse et une deuxième position haute de verrouillage.

En outre, l'élément marchepied relié solidairement au support rotatif est agencé en rotation autour d'un axe longitudinal s'étendant le long de la longueur du véhicule, dans la direction avant arrière.

En fonctionnement, dans la position basse, le premier ergot du support rotatif est logé dans l'encoche du support fixe avant de telle sorte que le dispositif anti-effraction est bloqué sous son propre poids dans cette position. Dans une telle position basse, la boule d'attelage de l'attache-remorque est libre d'accès et l'élément marchepied est accessible à l'utilisateur facilitant l'accès à l'espace de stockage du véhicule.

Lorsque l'utilisateur s'éloigne de son véhicule ou encore lorsque celui-ci a terminé sa journée de travail et que le véhicule reste en stationnement dans la rue, il peut facilement faire passer le dispositif anti-effraction de la position basse à la position haute de verrouillage. A cet effet il va soulever le support rotatif au moyen de l'élément marchepied de telle manière que le premier ergot va être délogé de l'encoche, puis il va effectuer une rotation du support rotatif autour d'un axe longitudinal s'étendant dans la longueur du véhicule, jusqu'à que le deuxième ergot se loge et reste bloqué dans l'encoche sous l'effet du propre poids du support rotatif et de l'élément marchepied.

Dans une telle position haute de verrouillage, l'ouverture des portes arrière du véhicule est obstruée et par conséquent bloquée par l'élément marchepied du dispositif anti-effraction selon l'invention, cet élément marchepied présente également l'avantage de faciliter l'accès à la galerie de toit du véhicule sur laquelle peuvent également être transporté des outils ou du matériel.

Le dispositif anti-effraction selon l'invention permet donc en position basse, d'avoir accès à la boule d'attelage pour accrocher une remorque, d'utiliser l'élément marchepied pour faciliter l'accès à l'espace de stockage arrière tel que le coffre et l'accès à la galerie de toit du véhicule.

Lors du passage en position haute de verrouillage en effectuant une rotation, le dispositif selon l'invention permet d'avoir accès à la galerie de toit du véhicule, d'entraver et bloquer l'ouverture des portes arrières du véhicule, et d'avoir la possibilité de conserver une remorque accrochée à l'attache-remorque, sans nécessité de manipulations supplémentaires lors du changement de position du dispositif selon l'invention. En effet, le passage entre la position basse et la position haute du dispositif selon l'invention est réalisé sans avoir besoin de décrocher la remorque puis l'accrocher à nouveau, offrant aux utilisateurs une utilisation et une manipulation aisée.

De préférence le matériau ou la structure dont l'élément marche pied du support rotatif est formé est agrippant contrairement aux renforts conventionnels des véhicules qui sont généralement en plastique glissant.

Par les termes « position haute de verrouillage », on entend au sens de la présente invention, que ledit au moins un deuxième ergot du support rotatif est logé dans l'encoche du support fixe avant, de telle manière que l'élément marchepied, qui est relié solidairement au support rotatif, est positionné dans un plan horizontal qui est sécant, de préférence perpendiculaire, au plan des portes fermées du véhicule et fait par conséquent obstacle à l'ouverture des portes.

Par les termes « position basse», on entend au sens de la présente invention que ledit au moins un premier ergot du support rotatif est logé dans l'encoche du support fixe avant, de telle manière que l'élément marchepied, qui est relié solidairement au support rotatif, est positionné dans un plan horizontal situé en dessous des portes arrière du véhicule, de sorte que l'ouverture des portes n'est pas entravée.

De préférence, le support fixe arrière et le support fixe avant du dispositif selon la présente invention, comprennent chacun au moins deux ouverture traversante agencée pour recevoir au moins deux moyens d'accrochage de l'attache-remorque au bloc d'ancrage.

Avantageusement selon l'invention, le premier ergot et le deuxième ergot du support rotatif sont espacés d'un angle compris entre 160° et 200°, de préférence compris entre 170° et 190°, par exemple de 180°.

L'avantage est de faciliter l'accès au véhicule, à l'espace de stockage arrière et/ou à la galerie de toit en position basse et/ou en position haute. Cela permet aussi de présenter un élément marchepied dans la position horizontale et plane permettant son utilisation qu'il soit en position haute ou en position basse facilitant son utilisation pour le manipulateur.

De préférence, l'élément marchepied du dispositif selon la présente invention comprend une première partie de marche pied et une deuxième partie de marchepied.

En effet, l'élément marchepied selon la présente invention peut se présenter sous une forme monobloc ou bien sous une forme de deux plateformes.

Par exemple, lorsque le dispositif selon l'invention est en position basse, l'élément marchepied comprend une partie gauche positionnée respectivement à gauche de l'attache-remorque et une partie droite positionnée respectivement à droite de l'attache-remorque. Il va de soi que lorsqu'on effectue un passage du dispositif de la position basse à la position haute de verrouillage en effectuant une rotation de 180° selon un axe horizontal s'étant d'avant en arrière du véhicule, les parties gauche et droite de l'élément marchepied vont être inversées en position haute.

De préférence, l'élément de fixation comprend en outre au moins une entretoise de renforcement. De préférence, l'entretoise de renforcement est positionnée entre le support fixe avant et le support fixe arrière, dans le support rotatif et plus particulièrement dans une zone vide du support rotatif, en son centre.

La présence d'une entretoise de renforcement permet d'obtenir une épaisseur suffisante pour permettre la compression des différentes pièces de l'élément de fixation et plus particulièrement du support rotatif, tout en laissant l'espace nécessaire à la rotation du support rotatif.

L'entretoise de renforcement, laquelle est fixée solidairement entre le support fixe avant et le support fixe arrière, permet en outre de guider la rotation du support rotatif. De préférence, le support rotatif comprend en outre un boîtier de renforcement.

La présence d'un boîtier de renforcement permet la création d'un espace supplémentaire pour y loger un mécanisme de sécurité comme par exemple une serrure.

De préférence, la première partie de marche pied et la deuxième partie de marche pied sont positionnées de part et d'autre du boîtier de renforcement.

De préférence, le boîtier de renforcement comprend une partie de blocage faisant saillie horizontalement du boîtier de renforcement, agencée pour empêcher le retrait d'une remorque accrochée à la boule d'attelage lorsque le dispositif est en position haute de verrouillage.

En effet, la partie de blocage faisant saillie horizontalement du boîtier de renforcement représente un élément de blocage du retrait de la remorque.

De manière particulièrement avantageuse, en position haute de verrouillage, le dispositif anti-effraction selon la présente invention permet donc d'avoir accès à la galerie de toit du véhicule, d'entraver et bloquer l'ouverture des portes arrières du véhicule, de conserver une remorque accrochée à la boule d'attelage lors du changement de position du dispositif et enfin de bloquer le retrait de cette remorque.

Avantageusement, le boîtier de renforcement comprend en outre une ouverture dans laquelle est logée une serrure agencée pour verrouiller le support rotatif, de préférence une serrure poussoir à pistons radiaux.

Cela présente l'avantage de sécuriser et verrouiller la position haute ou la position basse du dispositif selon l'invention. En effet, lorsque le véhicule reste à l'extérieur sans surveillance, il est avantageux d'avoir une serrure permettant de verrouiller le dispositif pour éviter le changement de position entre la position haute et la position basse et par conséquent le vol de la remorque ou le vol du contenu du véhicule.

De manière avantageuse, le boîtier de renforcement comprend en outre au moins un moteur électrique agencé pour entraîner en rotation le support rotatif.

La présence d'un moteur électrique pour permettre la mise en rotation du support rotatif présente l'avantage d'être plus ergonomique pour l'utilisateur. En effet, cela facilite la manutention de la part de l'ouvrier et permet à des utilisateurs blessés de pouvoir l'utiliser.

Avantageusement selon l'invention, la serrure est une serrure électrique. De préférence une serrure électrique poussoir à doigt d'indexage.

Par les termes « doigt d'indexage », on entend au sens de la présente invention un élément permettant de bloquer et verrouiller le mouvement de rotation ou de translation du dispositif.

De préférence, le moteur électrique et/ou la serrure électrique du dispositif selon la présente invention, comprennent un moyen de communication wifi, Bluetooth, infrarouge, NFC, tel qu'un émetteur, un récepteur, un processeur et une mémoire.

L'avantage est de pouvoir programmer à distance la serrure en fonction des heures d'utilisation du véhicule. Un autre avantage est de rajouter une sécurité par un système électrique. Il est possible de lier une serrure électrique à une alarme qui serait activé en cas d'utilisation non autorisée ou de vol.

Dans un autre mode de réalisation, le dispositif anti-effraction pour véhicule muni d'une attache-remorque, d'une boule d'attelage et d'un bloc d'ancrage au véhicule, comprend :
- un élément de fixation agencé pour être fixé entre l'attache-remorque et le bloc d'ancrage au véhicule, et
- un élément marchepied agencé de manière mobile entre une position basse et une position haute de verrouillage, caractérisé en ce que l'élément de fixation comprend :

- un support fixe arrière faisant face au bloc d'ancrage, et
- un support fixe avant opposé, faisant face à l'attache-remorque, qui est relié au support fixe arrière par des moyens de fixation, et présente au moins une encoche,
   en ce que l'élément marchepied est relié solidairement à un support rotatif qui est agencé en libre rotation entre le support fixe arrière et le support fixe avant et présente au moins un ergot,
   en ce que le support fixe arrière et le support fixe avant comprennent chacun au moins une ouverture traversante agencée pour recevoir au moins un moyen d'accrochage de l'attache-remorque au bloc d'ancrage,
   et en ce que, dans la position basse de l'élément marchepied, le au moins un ergot du support rotatif est maintenu contre une première butée de l'encoche et, dans la position haute de verrouillage de l'élément marchepied, le au moins un ergot du support rotatif est maintenu contre une deuxième butée de l'encoche, la position haute de verrouillage étant maintenue au moyen d'un verrouillage d'une serrure du dispositif.

En effet, le dispositif anti-effraction selon la présente invention est particulièrement avantageux en ce qu'il présente les avantages mentionnés ci-avant et en ce qu'il permet, en position basse de l'élément marchepied, lorsque l'ergot est maintenu contre la première butée de l'encoche, d'être maintenu dans cette position sous l'effet de son propre poids. Dans une telle position basse, la boule d'attelage de l'attache-remorque est libre d'accès et l'élément marchepied est accessible à l'utilisateur facilitant l'accès à l'espace de stockage du véhicule.

L'utilisateur peut également faire passer le dispositif anti-effraction facilement de la position basse à la position haute de verrouillage. A cet effet, il va simplement effectuer une rotation du support rotatif au moyen de l'élément marchepied autour d'un axe longitudinal s'étendant dans la longueur du véhicule, jusqu'à ce que l'ergot glisse dans l'encoche jusqu'à la deuxième butée de l'encoche. Lorsque l'ergot est maintenu contre la deuxième butée de l'encoche, l'élément marchepied est positionné à la verticale, c'est-à-dire en position haute de verrouillage, et le dispositif anti-effraction peut alors être verrouillé dans une telle position au moyen d'une serrure. Par exemple une serrure électrique, une serrure classique activée par un cylindre normalisé européen, ou encore par tout autre moyen de verrouillage permettant qu'un élément traverse le support rotatif et le support fixe arrière pour bloquer la rotation du dispositif.

Avantageusement, les première et deuxième butées de l'au moins une encoche du dispositif anti-effraction selon l'invention, sont espacées d'un angle compris entre 70° et 120°, de préférence compris entre 70° et 110°, préférentiellement compris entre 70° et 100°, avantageusement entre 80° et 100°, de manière avantageuse entre 85° et 95°, par exemple 90°.

Cela permet avantageusement qu'en position basse, l'élément marchepied soit positionné sur un axe de 0°, c'est-à-dire horizontal par rapport au sol, et qu'en position haute, l'élément marchepied soit positionné sur un axe à 90°, c'est-à-dire vertical par rapport au sol.

Avantageusement, l'élément de fixation comprend en outre au moins une entretoise de renforcement. De préférence, l'entretoise de renforcement est positionnée entre le support fixe avant et le support fixe arrière, dans le support rotatif et plus particulièrement dans une zone vide du support rotatif, en son centre.

La présence d'une entretoise de renforcement permet d'obtenir une épaisseur suffisante pour permettre la compression des différentes pièces de l'élément de fixation et plus particulièrement du support rotatif, tout en laissant l'espace nécessaire à la rotation du support rotatif.

L'entretoise de renforcement, laquelle est fixée solidairement entre le support fixe avant et le support fixe arrière, permet en outre de guider la rotation du support rotatif. De préférence, le support rotatif comprend en outre un boîtier de renforcement.

La présence d'un boîtier de renforcement permet la création d'un espace supplémentaire pour y loger un mécanisme de sécurité comme par exemple une serrure.

En outre, l'entretoise peut comprendre l'encoche ainsi que la première et la deuxième butée.

D'autres formes de réalisation du dispositif suivant l'invention sont indiquées dans les revendications annexées.

L'invention a aussi pour objet un procédé de placement du dispositif anti-effraction comprenant les étapes de :
- décrochage d'une attache-remorque liée à un bloc d'ancrage d'un véhicule muni de l'attache-remorque,
- placement du dispositif anti-effraction au niveau de l'attache-remorque, le support fixe arrière étant orienté vers le bloc d'ancrage et le support fixe avant étant orienté vers l'attache-remorque, opposée au bloc d'ancrage au véhicule, ledit support fixe arrière et ledit support fixe avant comprenant chacun au moins une ouverture traversante agencée pour recevoir au moins un moyen d'accrochage de ladite attache-remorque audit bloc d'ancrage,
- fixation de l'attache-remorque audit bloc d'ancrage du véhicule, avec moins un moyen d'accrochage passant par lesdites ouvertures traversantes du support fixe arrière et du support fixe avant.

La fixation du dispositif entre le bloc d'ancrage et l'attache-remorque du véhicule présente l'avantage de faciliter la pose et de diminuer le risque d'égratignures sur le véhicule. En effet, le véhicule étant déjà équipé d'un bloc d'ancrage, d'une attache-remorque et d'une boule d'attelage, la fixation du dispositif selon l'invention ne nécessite que le décrochage de l'attache-remorque de son bloc d'ancrage puis le placement puis le ré accrochage de l'attache-remorque au bloc d'ancrage. La fixation est rapide et ne nécessite pas de modification du dispositif en fonction du type de véhicule.

De préférence, le support fixe arrière et le support fixe avant du dispositif selon la présente invention, comprennent chacun au moins deux ouverture traversante agencée pour recevoir au moins deux moyens d'accrochage de l'attache-remorque au bloc d'ancrage.

Dans un mode de réalisation avantageuse, les moyens de fixation de l'attache-remorque au bloc d'ancrage au véhicule sont des boulons de sécurité anti-effraction.

D'autres formes de réalisation du procédé de placement du dispositif suivant l'invention sont indiquées dans les revendications annexées.

L'invention a aussi pour objet un système anti-effraction pour véhicule muni d'une attache-remorque, d'une boule d'attelage et d'un bloc d'ancrage au véhicule, comprenant un dispositif anti-effraction selon l'invention et au moins un boulon de sécurité anti-effraction comprenant une vis et un écrou, de préférence au moins deux boulons de sécurité anti-effraction, agencés pour permettre la fixation de ladite attache-remorque audit bloc d'ancrage au véhicule. De préférence, le boulon de sécurité anti-effraction comprend un écrou inviolable auto cassant, de préférence un écrou inviolable auto cassant M16.

L'avantage est de pouvoir fournir un système anti-effraction complet comprenant d'une part des boulons de sécurité anti-effraction permettant d'éviter le démontage du dispositif anti-effraction une fois que ce dernier est fixé à l'attache-remorque du véhicule, et d'autre part le dispositif anti-effraction selon l'invention permettant de bloquer l'ouverture des portes arrière, de bloquer le retrait d'une remorque accrochée et encore de faciliter l'accès à l'arrière du véhicule et/ou à la galerie de toit.

D'autres formes de réalisation du système anti-effraction pour véhicule muni d'une attache-remorque suivant l'invention sont indiquées dans les revendications annexées.

### Brève description des dessins

D'autres caractéristiques, détails et avantages de l'invention ressortiront de la description donnée ci-après, à titre non limitatif et en faisant référence aux dessins.
La figure 1A est une vue en perspective du dispositif anti-effraction selon l'invention lorsque l'élément marchepied est en position basse.
La figure 1B est une vue en perspective du dispositif anti-effraction selon l'invention lorsque l'élément marchepied est en position haute de verrouillage.
La figure 2A est une vue schématique de face du dispositif anti-effraction selon l'invention attaché au bloc d'ancrage du véhicule lorsque l'élément marchepied est en position basse.
La figure 2B est une vue schématique de face du dispositif anti-effraction selon l'invention attaché au bloc d'ancrage du véhicule lorsque l'élément marchepied est en position haute de verrouillage.
La figure 3 est une vue du dessus du dispositif anti-effraction selon l'invention lorsque l'élément marchepied est en position basse.
La figure 4 est une vue de face du dispositif anti-effraction selon l'invention lorsque l'élément marchepied est en position basse.
La figure 5A est une vue de face du support rotatif du dispositif anti-effraction selon l'invention.
La figure 5B est une vue de face du support fixe arrière du dispositif anti-effraction selon l'invention.
La figure 5C est une vue de face du support fixe avant du dispositif anti-effraction selon l'invention.
La figure 6 est une vue en perspective du dispositif anti-effraction selon l'invention en position haute de verrouillage fixé positionné entre le bloc d'ancrage d'un véhicule et avec une remorque accrochée sur la boule d'attelage.
La figure 7A est une vue en perspective d'une alternative d'un dispositif anti-effraction selon l'invention lorsque l'élément marchepied est en position basse.
La figure 7B est une vue arrière du dispositif anti-effraction de la figure 7A en position basse.
La figure 7C est une vue arrière du dispositif anti-effraction de la figure 7A en position haute de verrouillage.

Sur les figures, les éléments identiques ou analogues portent les mêmes références.

La liste des références utilisées est décrite ci-dessous :
1 - dispositif anti-effraction
2 - boule d'attelage
3 - porte arrière du véhicule
4 - élément marchepied
4' - première partie de l'élément marchepied
4" - deuxième partie de l'élément marchepied
5 - bloc d'ancrage
6 - support fixe arrière
7 - support fixe avant
8 - support rotatif
9 - premier ergot
10 - deuxième ergot
11 - attache-remorque
12 - encoche du support fixe avant
13 - ouverture traversante
14 - boîtier de renforcement
14' - partie de blocage du boîtier de renforcement
15 - ouverture du boîtier de renforcement
16 - boulon de sécurité
17 - remorque
18 - moyens de fixation du support fixe avant au support fixe arrière
19 - ouvertures de passage
20 - Première butée
21 - Deuxième butée

### Description détaillée d'une réalisation de l'invention

D'autres caractéristiques et avantages de la présente invention seront tirés de la description non limitative qui suit, et en faisant référence aux dessins.

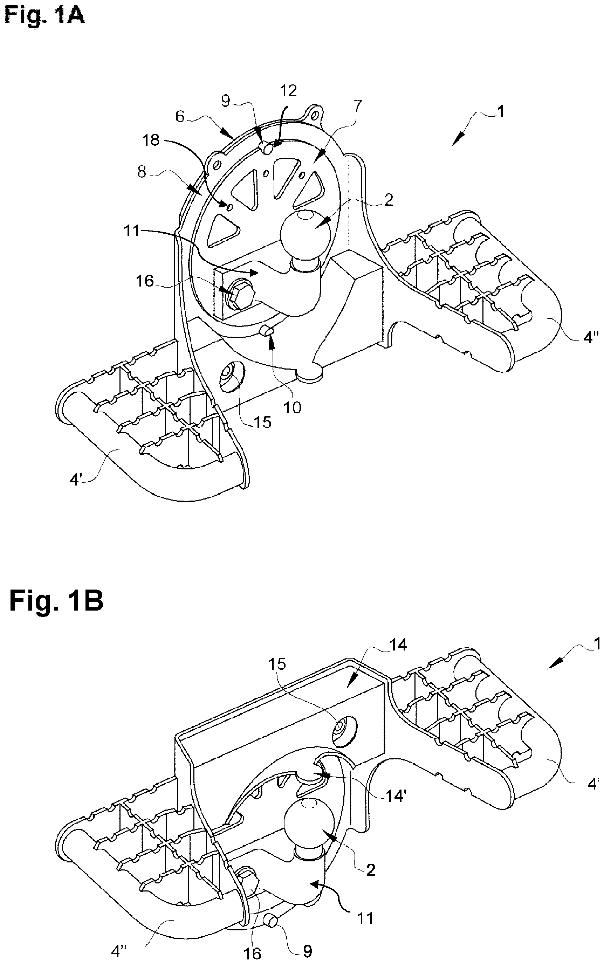

Les figures 1A et 1B illustrent un dispositif anti-effraction 1 comprenant un élément de fixation qui comprend un support fixe arrière 6 agencé pour faire face à un bloc d'ancrage 5 (non visible), un support fixe avant 7 opposé au support fixe arrière 6 et agencé pour faire face à une attache-remorque 11, et un support rotatif 8 qui est positionné et agencé pour tourner en libre rotation entre le support fixe arrière 6 et le support fixe avant 7. Le support rotatif 8 peut par exemple tourner dans le sens horaire ou dans le sens anti-horaire. En outre, la rotation du support rotatif 8 est possible à 360°.

Le support fixe arrière 6 et le support fixe avant 7 sont reliés entre eux par trois moyens de fixation 18 tels que des vis.

Le support fixe arrière 6 et le support fixe avant 7 sont également reliés entre eux par deux boulons 16. Ces boulons 16 pouvant être avantageusement des boulons de sécurité 16 anti-effraction. Ces boulons de sécurité permettent d'une part de relier les deux supports fixes 6, 7 entre eux et d'autre part de relier l'élément de fixation du dispositif anti-effraction 1 selon l'invention au bloc d'ancrage du véhicule 5 (non visible). De préférence, les boulons anti-effraction 16 sont plus longs que les boulons d'origine de l'attache-remorque 11 permettant ainsi de mieux fixer le dispositif anti-effraction 1 et comprenant une sécurité contre leur retrait, par exemple un boulon anti-effraction 16 peut être de forme particulière de sorte qu'il n'est pas dévissable ou retirable avec un appareil conventionnel.

Le support fixe avant 7 présente une encoche 12 qui est agencée pour recevoir un ergot 9, 10 du support rotatif 8. L'encoche 12 peut prendre la forme d'un demi-cercle. Le support rotatif 8 comprend un premier ergot 9 et un deuxième ergot 10. Les deux ergots 9 et 10 sont espacés d'un angle de 180°, cela permettant en fonctionnement de présenter l'élément marchepied dans une position horizontale et plane, et ce autant en position haute de verrouillage qu'en position basse. De préférence, les ergots 9, 10 et l'encoche 12 ont une forme arrondie complémentaire, de telle manière que l'encoche 12 est agencée pour recevoir sans résistance l'un ou l'autre des ergots 9, 10 selon que l'élément marchepied est en position haute ou en position basse.

L'élément marchepied 4 est relié solidairement au support rotatif 8. En fonctionnement, lorsque le premier ergot 9 du support rotatif 8 se loge dans l'encoche 12 du support fixe avant 7, l'élément marchepied est dans une position basse comme illustré sur la figure 1A. Le dispositif anti-effraction 1 est bloqué sous son propre poids dans cette position basse permettant à l'utilisateur d'ouvrir les portes arrière d'un véhicule, de prendre appui sur l'élément marchepied 4 pour accéder à l'espace de stockage du véhicule ou bien à la galerie de toit et de fixer une remorque sur la boule d'attelage 2 qui est libre d'accès.

Lorsque le deuxième ergot 10 du support rotatif 8 se loge dans l'encoche 12 du support fixe avant 7, l'élément marchepied 4 est dans une position haute de verrouillage comme illustré sur la figure 1B. Le dispositif 1 est bloqué sous son propre poids dans cette position haute de verrouillage permettant à l'utilisateur d'accéder à la galerie du toit et d'entraver et bloquer l'ouverture des portes arrières 3 du véhicule.

En fonctionnement, autant en position basse qu'en position haute de verrouillage il est nécessaire de soulever le support rotatif 8 au moyen de l'élément marchepied 4 qui y est solidairement relié afin de déloger l'ergot 9, 10 de l'encoche 12 puis l'élément marchepied 4 pivote de la position basse à la position haute de verrouillage ou inversement par rotation du support rotatif 8 autour d'un axe longitudinal s'étendant le long du véhicule, dans la direction avant arrière. De manière particulièrement avantageuse, le dispositif anti-effraction 1 selon la présente invention permet de passer d'une position basse à une position haute de verrouillage sans effort. Dans les deux positions, l'élément marchepied 4 se présente dans la position horizontale et plane permettant à l'utilisateur d'accéder soit à la galerie de toit, soit à l'espace de stockage du véhicule, soit aux deux. De manière particulièrement avantageuse, l'élément marchepied 4 est utilisable dans toutes les positions. La rotation du support rotatif 8 peut être faite manuellement ou électriquement.

De préférence, l'élément marchepied 4 est en métal, de préférence en acier, de préférence en acier inoxydable, de préférence en acier inoxydable peint ou traité contre la corrosion. Par les termes « acier inoxydable », on entend au sens de la présente invention un alliage comprenant en outre du fer, du carbone et du chrome.

L'élément marchepied 4 peut comprendre un maillage de tiges métalliques qui se croisent formant ainsi une grille solide permettant la création d'une zone d'appui du pied pour l'utilisateur. De préférence, les tiges métalliques sont en forme de treillis. L'élément marchepied 4 peut être recouvert d'une couche supplémentaire de matière siliconée antidérapante.

L'élément marchepied 4 comprend de préférence deux parties, une première partie de marchepied 4' positionnée à gauche de l'attache-remorque 11 et une deuxième partie de marchepied 4" positionnée à droite de l'attache-remorque 11, lorsque le dispositif anti-effraction 1 est en position basse comme sur la figure 1A, on comprend aisément qu'en effectuant une rotation de 180° pour passer à la position haute de verrouillage, la première partie de marchepied 4' deviendra ainsi positionnée à droite de l'attache-remorque 11 et la deuxième partie de marchepied 4" quant à elle sera positionnée à gauche de l'attache-remorque 11 comme illustré à la figure 1B. Les deux parties de marche pied 4' et 4" sont positionnées de part et d'autre d'un boitier de renforcement 14. Le boîtier de renforcement 14 comprend en outre une ouverture 15 dans laquelle est logée une serrure agencée pour verrouiller le support rotatif et donc éviter le changement de position qui permettrait le vol de la remorque 17 et/ou le vol du contenu du véhicule. De préférence, la serrure est une serrure à doigt d'indexage comprenant un capteur électrique permettant de fournir, par un contrôle électronique, l'état du doigt d'indexage.

Comme on peut le constater sur les figures 1A et 1B, le boîtier de renforcement 14 comprend une partie de blocage 14' qui fait saillie horizontalement permettant, lorsque l'élément marchepied 4 est en position haute de verrouillage d'empêcher le retrait d'une remorque 17 accrochée à la boule d'attelage 2. De préférence, la partie de blocage 14' comprend une extrémité ronde agencée pour se positionner au-dessus de la boule d'attelage 2.

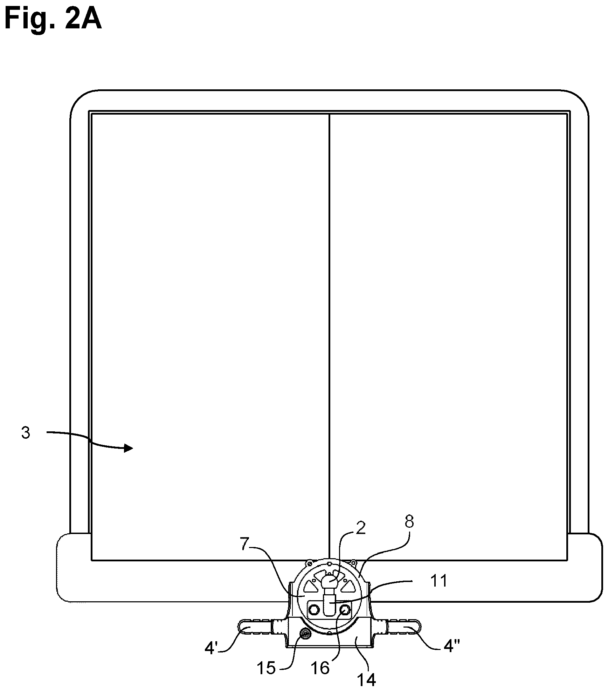

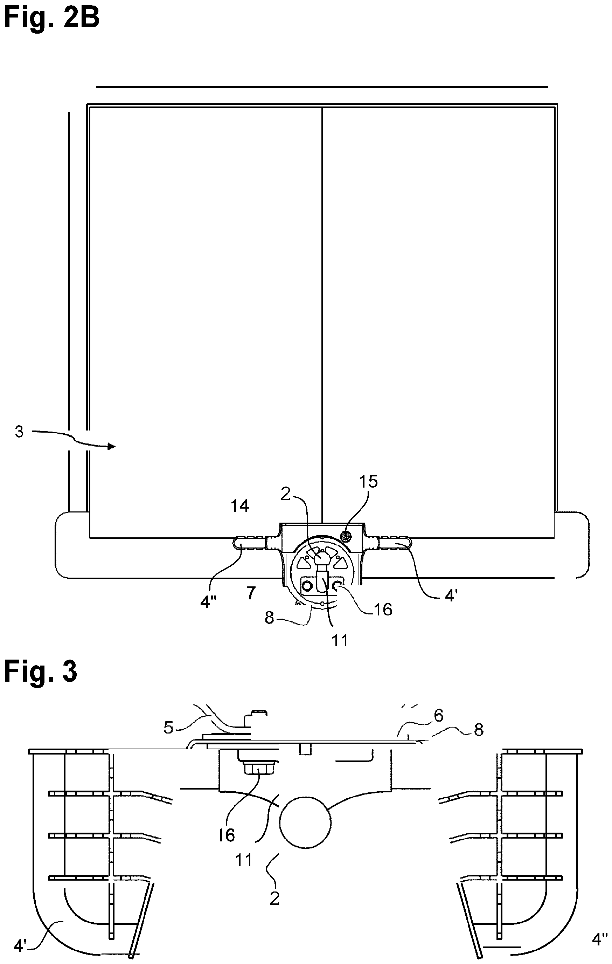

Les figures 2A et 2B illustrent le dispositif anti-effraction 1 fixé au bloc d'ancrage 5 du véhicule (non visible). La figure 2A illustre l'élément marchepied 4 dans une position basse et la figure 2B illustre l'élément marchepied 4 en position haute de verrouillage.

Le dispositif anti-effraction 1 est placé au niveau de l'attache remorque 11, le support fixe arrière 6 est orienté vers le bloc d'ancrage 5 (non visible) et le support fixe avant 7 est orienté vers l'attache-remorque 11, opposée au bloc d'ancrage 5 du véhicule (non visible). Trois moyens de fixation 18 permettent de relier solidairement le support fixe avant 7 au support fixe arrière 6 et deux boulons 16 permettent de relier ensemble le support fixe arrière 6, le support fixe avant 7, le support rotatif 8 agencé en libre rotation, l'attache-remorque 11 et le bloc d'ancrage 5. De manière avantageuse selon la présente invention, l'ensemble des éléments fixé par les moyens de fixation 18 est robuste.

Comme illustré sur la figure 2A, lorsque l'élément marchepied 4 en deux parties 4' et 4" est dans une position basse, l'utilisateur peut accéder à l'espace de stockage du véhicule, à la galerie de toit et peut fixer une remorque 17 sur la boule d'attelage 2 qui est libre d'accès. En outre, en position basse, le dispositif anti-effraction 1 est en-dessous de la partie inférieure de l'encadrement des portes arrières 3 permettant l'ouverture des portes arrières 3 et donc l'accessibilité au contenu du véhicule.

Comme illustré sur la figure 2B, lorsque l'élément marchepied 4 en deux parties 4' et 4" est dans une position haute de verrouillage, l'utilisateur peut accéder à la galerie du toit 2 et le dispositif anti-effraction 1 obstrue et fait obstacle l'ouverture des portes arrières 3 du véhicule. En position haute de verrouillage, la partie supérieure du boitier de renforcement 14 est au-dessus de la partie inférieure de l'encadrement des portes arrières 3 permettant ainsi de bloquer l'ouverture des portes.

La figure 3 est une vue du-dessus du dispositif anti-effraction 1 lorsqu'il est fixé entre le bloc d'ancrage 5 du véhicule et l'attache-remorque 11. De préférence, les deux boulons 16 de sécurité sont espacés d'environ 90 mm sur un plan horizontal. De préférence, les deux boulons 16 traversent le dispositif anti-effraction 1, le bloc d'ancrage 5 et l'attache-remorque 11. De préférence, les boulons 16 sont des boulons de sécurité. De préférence, les boulons 16 sont verrouillés du côté du bloc d'ancrage 5.

Par les termes « bloc d'ancrage » selon la présente invention, on entend un support fixé sous le véhicule permettant la fixation d'une attache-remorque conventionnelle par des moyens de fixation, comme par exemple, des boulons.

Par les termes « boule d'attelage» selon la présente invention, on entend la boule sur laquelle il est possible de fixer une remorque, au moyen d'un bras d'accrochage présentant à son extrémité libre une forme creusée complémentaire à la boule d'attelage.

Par les termes « attache-remorque » selon la présente invention, on entend un support sur lequel repose la boule d'attelage.

De préférence la boule d'attelage 2 est reliée à l'extrémité libre de l'attache-remorque 11. La boule d'attelage 2 et l'attache remorque 11 sont en deux pièces. Dans une autre forme de réalisation, la boule d'attelage 2 et l'attache-remorque 11 sont en une seule pièce.

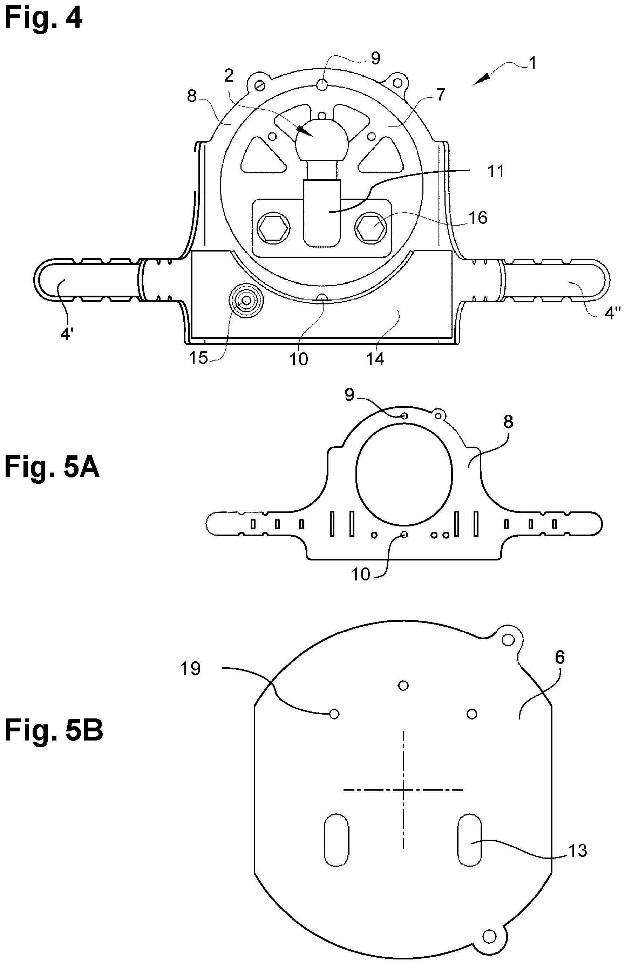

La figure 4 est une vue de face du dispositif anti-effraction 1 lorsque l'élément marchepied 4 est en position basse. Le dispositif anti-effraction 1 comprend un support fixe arrière 6 (non visible), un support fixe avant 7, et un support rotatif 8 qui est agencé pour tourner en libre rotation entre les deux supports fixes arrière 6 et avant 7. Deux boulons 16 de sécurité permettent de relier solidairement le dispositif anti-effraction 1 au bloc d'ancrage du véhicule 5 en le positionnant entre ledit bloc d'ancrage 5 et ladite attache-remorque 11.

Le support fixe avant 7 comprend une encoche 12 qui est agencée pour recevoir un ergot 9, 10 du support rotatif 8. Le support rotatif 8 comprend un premier ergot 9 se logeant dans l'encoche 12 du support fixe avant 7 afin de positionner l'élément marchepied 4 qui est solidairement relié au support rotatif 8 en position basse. Le dispositif anti-effraction 1 est bloqué sous son propre poids dans cette position permettant à l'utilisateur d'accéder à l'espace de stockage du véhicule en présentant l'élément marchepied 4 de manière horizontale et plane.

De préférence, le support fixe avant 7 à un diamètre inférieur à celui du support rotatif 8.

L'élément marchepied 4 comprend de préférence deux parties, une première partie de marchepied 4' positionnée à gauche de l'attache-remorque 11 et une deuxième partie de marchepied 4" positionnée à droite de l'attache-remorque 11, lorsque le dispositif anti-effraction 1 est en position basse comme représenté en figure 4. Un boitier de renforcement 14 est logé entre les deux parties de marchepied 4' et 4". Le boîtier de renforcement 14 comprend en outre une ouverture 15 dans laquelle est logée une serrure agencée pour verrouiller le support rotatif 8 et donc éviter le changement de position qui permettrait le vol de la remorque 17 et/ou le vol du contenu du véhicule. De préférence, la serrure est une serrure à doigt d'indexage. De manière particulièrement avantageuse, le dispositif anti-effraction 1 est verrouillé et sécurisé sur le véhicule.

La figure 5A est une vue de face du support rotatif 8. De préférence, le support rotatif 8 est relié solidairement une première partie de marchepied 4' (non visible) positionnée à gauche du disque rotatif 8 tel que représenté en Fig. 5A, et une deuxième partie de marchepied 4" (non visible) positionnée à droite du disque rotatif 8 tel que représenté en Fig. 5A. De préférence, le support rotatif 8 et les deux parties de marchepied 4' et 4" sont fabriqués en une seule pièce monobloc offrant une résistance mécanique améliorée. De préférence, le support rotatif 8 est en métal, plus particulièrement en acier, plus particulièrement en acier inoxydable peint ou traité contre la corrosion. Le support rotatif 8 présente par exemple une épaisseur comprise entre 1 et 10 mm, de préférence entre 2 et 6 mm, par exemple 4 mm.

Le support rotatif 8 présente par exemple une hauteur comprise entre 150 et 350 mm, de préférence entre 200 et 300 mm, par exemple 260 mm.

La largeur du support rotatif 8 fixé solidairement à l'élément marchepied 4 est compris entre 550 et 780 mm, de préférence entre 600 et 730mm, par exemple 670 mm.

La largeur de l'élément marchepied 4 est calculée afin que la rotation du support rotatif 8 puisse s'effectuer sans que l'élément marchepied 4 ne touche le sol lors du passage d'une position à l'autre, par exemple la largeur de l'élément marchepied 4 est inférieure à 70cm, de préférence inférieure à 65cm, plus préférentiellement inférieure à 60cm.

Le support rotatif 8 est de préférence un disque substantiellement de forme ronde. Le support rotatif comprend deux ergots, un premier ergot 9 et un deuxième ergot 10, espacés d'un angle de 180° et alignés sur un même plan vertical permettant de conserver l'élément marchepied 4 de manière horizontale et plane pour accéder à l'espace de stockage du véhicule ou à la galerie de toit du véhicule. Le support rotatif illustré sur la figure 5A comprend une zone vide en son centre. Cette zone permet le passage des moyens de fixation 18 qui permettent de relier le disque fixe avant 7 au disque fixe arrière 6. Cette zone vide permet, en plus de relier les supports fixes, de fixer le dispositif anti-effraction 1 au bloc d'ancrage 5 et à l'attache-remorque 11. De manière avantageuse, cette zone vide est traversée par tous les moyens de fixation du dispositif de telle manière que la fixation de l'ensemble est robuste et que la libre rotation du support rotatif 8 n'est pas entravé.

Dans une forme de réalisation alternative, l'élément de fixation comprend une entretoise de renforcement destinée à se positionner dans la zone vide du support rotatif 8.

En effet, l'entretoise de renforcement se positionne entre le support fixe avant 7 et le support fixe arrière 6, et plus particulièrement dans le support rotatif 8.

Le support rotatif 8 est positionné sur le pourtour de l'entretoise de renforcement, de telle manière que le support rotatif 8 vient se placer autour de l'entretoise de renforcement, cette dernière se plaçant dans la zone vide du support rotatif 8 prévue à cet effet.

De préférence, l'entretoise de renforcement présente une épaisseur comprise entre 1 et 10 mm, de préférence entre 3 et 7 mm, par exemple 5 mm permettant d'obtenir une épaisseur suffisante pour permettre la compression des différentes pièces de l'élément de fixation et plus particulièrement du support rotatif 8 tout en laissant l'espace nécessaire à la rotation et/ou la translation du support rotatif 8.

En outre, l'entretoise de renforcement, laquelle est fixée solidairement entre le support fixe avant 7 et le support fixe arrière 6, et plus particulièrement dans la zone vide du support de rotation 8 permet en outre de guider la rotation du support rotatif 8, autour de cette dernière.

L'entretoise de renforcement comprenant en outre des ouvertures traversantes permettant le passage des moyens de fixation 18 qui permettent de relier le disque fixe avant 7 au disque fixe arrière 6 et de fixer le dispositif anti-effraction 1 au bloc d'ancrage 5 et à l'attache-remorque 11. De manière avantageuse, les ouvertures traversantes de l'entretoise de renforcement sont traversées par tous les moyens de fixation du dispositif de telle manière que la fixation de l'ensemble est robuste et que la libre rotation du support rotatif 8 n'est pas entravé et avantageusement guidée autour de l'entretoise de renforcement.

La figure 5B illustre le support fixe arrière 6. De préférence, le support fixe arrière 6 est de forme ronde tronquée. De préférence, le support fixe arrière 6 est en métal, plus particulièrement en acier, plus particulièrement en acier inoxydable peint ou traité contre la corrosion. Le support fixe arrière 6 présente par exemple une épaisseur comprise entre 1 et 10 mm, de préférence entre 3 et 7 mm, par exemple 5 mm. Le support fixe arrière 6 présente par exemple une hauteur comprise entre 150 et 350 mm, de préférence entre 200 et 300 mm, par exemple 230 mm. Comme illustré sur la figure 5B, le support fixe arrière 6 comprend trois ouvertures de passage 19 permettant le passage des moyens de fixations pour relier le support fixe avant 7 au support fixe arrière 6.

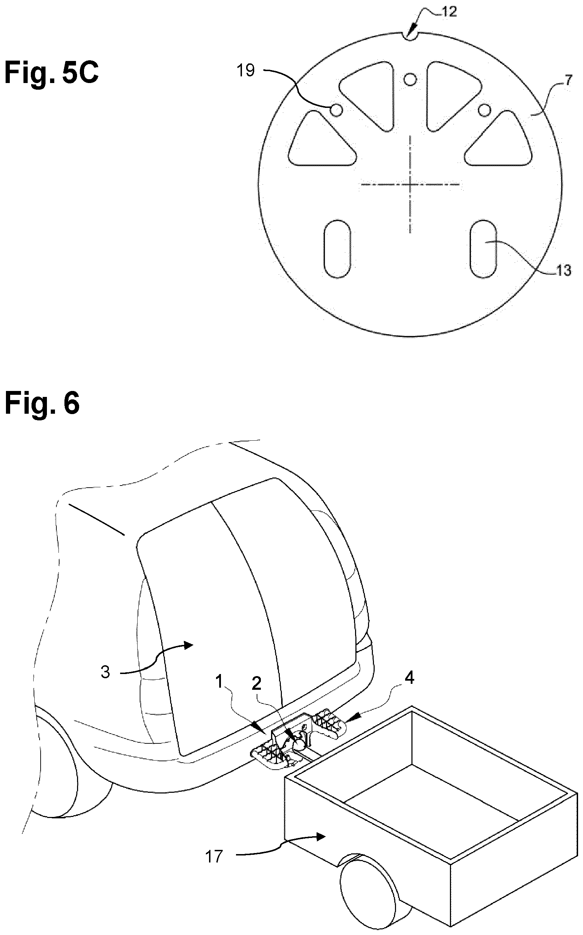

La figure 5C illustre le support fixe avant 7. De préférence, le support fixe avant 7 est de forme ronde et comprend une encoche 12 destiné à accueillir un premier ergot 9 ou un deuxième ergot 10 du support rotatif 8. De préférence, le support fixe avant 8 est en métal, plus particulièrement en acier, plus particulièrement en acier inoxydable peint ou traité contre la corrosion. De préférence, le support fixe avant 7 présente une épaisseur comprise entre 1 et 10 mm, de préférence entre 3 et 7 mm, par exemple 5 mm. De préférence, le support fixe arrière 6 présente une hauteur comprise entre 50 et 250 mm, de préférence entre 100 et 200 mm, par exemple 160 mm. De préférence, le support fixe avant 7 peut comprendre d'autres ouvertures. Comme illustré sur la figure 5C, le support fixe avant 7 comprend trois ouvertures de passage 19 permettant le passage des moyens de fixations pour relier le support fixe avant 7 au support fixe arrière 6. Les ouvertures de passage 19 du support fixe avant 7 sont alignées aux ouvertures de passage 19 du support fixe arrière 6.

Les disques fixes avant 7 et arrière 6 comprennent en outre chacun deux ouvertures traversantes 13 agencées pour recevoir deux moyens d'accrochages, de préférence deux boulons de sécurité 16 anti-effraction. Cela permettra en outre de fixer l'élément de fixation entre le bloc d'ancrage du véhicule 5 et l'attache-remorque 11. De préférence, les ouvertures traversantes des deux disques fixes sont espacées d'environ 90 mm.

La figure 6 illustre le dispositif anti-effraction 1 relié au bloc d'ancrage du véhicule 5 et à l'attache-remorque 11. Une remorque 17 est reliée sur la boule d'attelage 2 sur l'extrémité supérieure de l'attache-remorque 11. L'élément marchepied 4 est en position haute de verrouillage permettant de bloquer l'ouverture des portes arrières 3 du véhicule et le retrait de la remorque 17. L'avantage du dispositif anti-effraction 1 est de permettre le passage entre la position basse et la position haute de l'élément marchepied 4 sans avoir besoin de décrocher la remorque 17 puis l'accrocher à nouveau. De manière particulièrement avantageuse, le dispositif anti-effraction 1 selon la présente invention permet de passer une position à l'autre sans effort, sans avoir à retirer une remorque 17 fixé à la boule d'attelage 2. Cela permet à l'utilisateur une utilisation et une manipulation aisée.

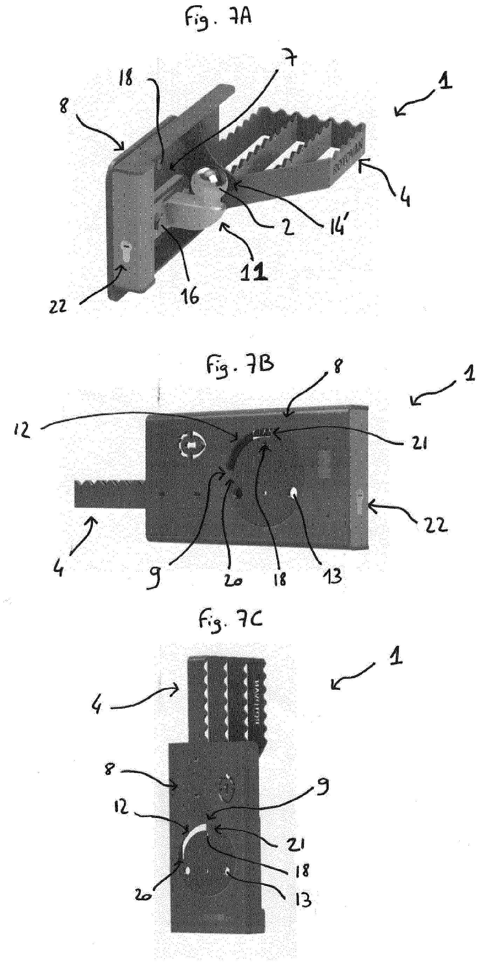

Les figures 7A, 7B et 7C illustrent une alternative du dispositif anti-effraction 1, présentant les mêmes avantages que précédemment évoqués et, comprenant un élément de fixation qui comprend un support fixe arrière 6 (non visible) agencé pour faire face à un bloc d'ancrage 5 (non visible), un support fixe avant 7 opposé au support fixe arrière 6 et agencé pour faire face à une attache-remorque 11, et un support rotatif 8 qui est positionné et agencé pour tourner en libre rotation entre le support fixe arrière 6 et le support fixe avant 7. Le support rotatif 8 peut par exemple tourner dans le sens horaire ou dans le sens anti-horaire, selon le positionnement de l'encoche 12. Tel que représenté en figures 7, le support rotatif 8 peut tourner dans le sens anti-horaire, dans un intervalle compris entre 0° et 90°.

En outre, l'encoche 12 présente une première butée 20 et une deuxième butée 21, distinctes l'une de l'autre, entre lesquelles vient se loger un ergot 9. Par conséquent, le support rotatif 8, au moyen de son ergot 9 est en libre rotatif dans les limites de la première et de la deuxième butées 20, 21 de l'encoche 12.

Dans la position basse de l'élément marchepied 4, l'ergot 9 est maintenu contre la première butée 20 de l'encoche 12, ainsi l'élément marchepied 4 et par conséquent le dispositif anti-effraction 1 est positionné à l'horizontale par rapport au sol, tel que cela est représenté aux figures 7A et 7B. Dans une telle position basse, la boule d'attelage 2 de l'attache-remorque 11 est libre d'accès et l'élément marchepied 4 est accessible à l'utilisateur facilitant l'accès à l'espace de stockage du véhicule.

L'élément marchepied 4, au moyen du support rotatif 8, peut pivoter, c'est-à-dire que l'ergot 9 va glisser dans l'encoche 12, de sa première position contre la première butée 20, vers une autre position contre la deuxième butée 21.

Dans une telle position haute de verrouillage, l'ergot 9 est maintenu contre la deuxième butée 21 de l'encoche 12, tel que cela apparait à la figure 7C. Ainsi, l'élément marchepied 4 est positionné à la verticale, c'est-à-dire en position haute de verrouillage, et le dispositif anti-effraction 1 peut alors être verrouillé dans une telle position au moyen d'une serrure 22. Par exemple une serrure électrique, une serrure classique activée par un cylindre normalisé européen, ou encore par tout autre moyen de verrouillage permettant qu'un élément traverse le support rotatif 8 et le support fixe arrière 6 pour bloquer la rotation du dispositif.

En outre, l'élément de fixation comprend une entretoise de renforcement, distincte ou non distincte, destinée à se positionner dans la zone vide du support rotatif 8.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif anti-effraction (1) pour véhicule muni d'une attache-remorque (11), d'une boule d'attelage (2) et d'un bloc d'ancrage (5) au véhicule, ledit dispositif anti-effraction comprenant :
- un élément de fixation agencé pour être fixé entre l'attache-remorque (11) et le bloc d'ancrage (5) au véhicule, et
- un élément marchepied (4) agencé de manière mobile entre une position basse et une position haute de verrouillage,
**caractérisé en ce que** ledit élément de fixation comprend :
- un support fixe arrière (6) faisant face audit bloc d'ancrage (5), et
- un support fixe avant (7) opposé, faisant face à ladite attache-remorque (11), qui est relié audit support fixe arrière (6) par des moyens de fixation, et présente au moins une encoche (12),
**en ce que** ledit élément marchepied (4) est relié solidairement à un support rotatif (8) qui est agencé en libre rotation entre ledit support fixe arrière (6) et ledit support fixe avant (7) et présente au moins un premier ergot (9) et au moins un deuxième ergot (10),
**en ce que** ledit support fixe arrière (6) et ledit support fixe avant (7) comprennent chacun au moins une ouverture traversante (13) agencée pour recevoir au moins un moyen d'accrochage de ladite attache-remorque (11) audit bloc d'ancrage (5),
et **en ce que**, dans ladite position basse de l'élément marchepied (4), ledit au moins un premier ergot (9) du support rotatif (8) est logé dans ladite au moins une encoche (12) du support fixe avant (7) et, dans ladite position haute de verrouillage de l'élément marchepied (4), ledit au moins un deuxième ergot (10) du support rotatif (8) est logé dans ladite au moins une encoche (12) du support fixe avant (7).

2. Dispositif anti-effraction (1) selon la revendication 1, dans lequel ledit premier ergot (9) et ledit deuxième ergot (10) dudit support rotatif (8) sont espacés d'un angle compris entre 160° et 200°, de préférence compris entre 170° et 190°, par exemple de 180°.

3. Dispositif anti-effraction (1) selon la revendication 1 ou 2, dans lequel ledit élément marchepied (4) comprend une première partie de marchepied (4') et une deuxième partie (4") de marchepied.

4. Dispositif anti-effraction (1) selon l'une quelconque des revendications 1 à 3, dans lequel ledit support rotatif (8) comprend en outre un boîtier de renforcement (14).

5. Dispositif anti-effraction (1) selon l'une quelconque des revendication 1 à 4, dans lequel l'élément de fixation comprend en outre au moins une entretoise de renforcement.

6. Dispositif anti-effraction (1) selon la revendication 4 lorsqu'elle dépend de la revendication 3, dans lequel ladite première partie de marchepied (4') et ladite deuxième partie de marchepied (4") sont positionnées de part et d'autre dudit boîtier de renforcement (14).

7. Dispositif anti-effraction (1) selon la revendication 5 ou 6, dans lequel ledit boîtier de renforcement (14) comprend une partie de blocage (14') faisant saillie horizontalement du boîtier de renforcement (14), agencée pour empêcher le retrait d'une remorque (17) accrochée à ladite boule d'attelage (2) lorsque ledit dispositif (1) est en position haute de verrouillage.

8. Dispositif anti-effraction (1) selon l'une quelconque des revendication 4 à 7, dans lequel ledit boîtier de renforcement (14) comprend en outre une ouverture (15) dans laquelle est logée une serrure agencée pour verrouiller ledit support rotatif (8), de préférence une serrure poussoir à pistons radiaux.

9. Dispositif anti-effraction (1) selon l'une quelconque des revendications 4 à 8, dans lequel ledit boîtier de renforcement (14) comprend en outre au moins un moteur électrique agencé pour entraîner en rotation ledit support rotatif (8).

10. Dispositif anti-effraction (1) selon la revendication 8 ou 9, dans lequel ladite serrure (22) est une serrure électrique, de préférence une serrure électrique à doigt d'indexage.

11. Dispositif anti-effraction (1) pour véhicule muni d'une attache-remorque (11), d'une boule d'attelage (2) et d'un bloc d'ancrage (5) au véhicule, ledit dispositif anti-effraction comprenant :
- un élément de fixation agencé pour être fixé entre l'attache-remorque (11) et le bloc d'ancrage (5) au véhicule, et
- un élément marchepied (4) agencé de manière mobile entre une position basse et une position haute de verrouillage,
**caractérisé en ce que** ledit élément de fixation comprend :
- un support fixe arrière (6) faisant face audit bloc d'ancrage (5), et
- un support fixe avant (7) opposé, faisant face à ladite attache-remorque (11), qui est relié audit support fixe arrière (6) par des moyens de fixation, et présente au moins une encoche (12),
**en ce que** ledit élément marchepied (4) est relié solidairement à un support rotatif (8) qui est agencé en libre rotation entre ledit support fixe arrière (6) et ledit support fixe avant (7) et présente au moins un ergot (9),
**en ce que** ledit support fixe arrière (6) et ledit support fixe avant (7) comprennent chacun au moins une ouverture traversante (13) agencée pour recevoir au moins un moyen d'accrochage de ladite attache-remorque (11) audit bloc d'ancrage (5),
et **en ce que**, dans ladite position basse de l'élément marchepied (4), ledit au moins un ergot (9) du support rotatif (8) est maintenu contre une première butée (20) de ladite encoche (12) et, dans ladite position haute de verrouillage de l'élément marchepied (4), ledit au moins un ergot (9) du support rotatif (8) est maintenu contre une deuxième butée (21) de ladite encoche (12), ladite position haute de verrouillage étant maintenue au moyen d'un verrouillage d'une serrure (22) dudit dispositif (1).

12. Dispositif anti-effraction (1) selon la revendication 11, dans lequel lesdites première et deuxième butées (20, 21) de ladite au moins une encoche (12) sont espacées d'un angle compris entre 70° et 120°, de préférence compris entre 70° et 110°, préférentiellement compris entre 70° et 100°, avantageusement entre 80° et 100°, de manière avantageuse entre 85° et 95°, par exemple 90°.

13. Procédé de placement d'un dispositif anti-effraction (1) selon l'une quelconque des revendications 1 à 12, comprenant les étapes de :
- décrochage d'une attache-remorque (11) liée à un bloc d'ancrage (5) d'un véhicule muni de l'attache-remorque (11),
- placement du dispositif anti-effraction (1) au niveau de l'attache-remorque (11), le support fixe arrière (6) étant orienté vers le bloc d'ancrage (5) et le support fixe avant (7) étant orienté vers l'attache-remorque (11), opposée au bloc d'ancrage (5) au véhicule, ledit support fixe arrière (6) et ledit support fixe avant (7) comprenant chacun au moins une ouverture traversante (13) agencée pour recevoir au moins un moyen d'accrochage de ladite attache-remorque (11) audit bloc d'ancrage (5),
- fixation de l'attache-remorque (11) audit bloc d'ancrage (5) du véhicule, avec moins un moyen d'accrochage passant par lesdites ouvertures traversantes (13) du support fixe arrière (6) et du support fixe avant (7).

14. Procédé de placement d'un dispositif anti-effraction (1) selon la revendication 13, dans lequel lesdits moyens de fixation de ladite attache-remorque (11) audit bloc d'ancrage (5) au véhicule sont des boulons de sécurité (16) anti-effraction.

15. Système anti-effraction pour véhicule muni d'une attache-remorque (11), d'une boule d'attelage (2) et d'un bloc d'ancrage (5) au véhicule, comprenant un dispositif anti-effraction (1) selon l'une quelconque des revendications 1 à 12 et au moins un boulon de sécurité (16) anti-effraction, de préférence au moins deux boulons de sécurité (16) anti-effraction, agencés pour permettre la fixation de ladite attache-remorque (11) audit bloc d'ancrage (5) au véhicule.
